(19) Europäisches Patentamt
European Patent Office
Office européen des brevets

(11) Veröffentlichungsnummer: **0 222 189**
**B1**

(12) **EUROPÄISCHE PATENTSCHRIFT**

(45) Veröffentlichungstag der Patentschrift: **23.08.89**

(51) Int. Cl.⁴: **C 08 F 136/06**, C 08 F 4/62

(21) Anmeldenummer: **86114239.6**

(22) Anmeldetag: **15.10.86**

(54) **Verfahren und Katalysator zur Herstellung von syndiotaktischem 1,2-Polybutadien.**

(30) Priorität: **26.10.85 DE 3538130**

(43) Veröffentlichungstag der Anmeldung: **20.05.87 Patentblatt 87/21**

(45) Bekanntmachung des Hinweises auf die Patenterteilung: **23.08.89 Patentblatt 89/34**

(84) Benannte Vertragsstaaten: **BE DE FR GB IT NL**

(56) Entgegenhaltungen:
**FR-A-2 421 916**

**CHEMICAL ABSTRACTS, Band 80, 1974, Seite 66, Zusammenfassung nr. 4644n, Columbus, Ohio, US; & JP-A-73 06 939**

(73) Patentinhaber: **BUNAWERKE HÜLS GMBH, Postfach 1320, D-4370 Marl 1 (DE)**

(72) Erfinder: **Witte, Josef, Dr., Haferkamp 10, D-5000 Köln 80 (DE)**
Erfinder: **Sylvester, Gerd, Dr., An der Steinrütsch 5a, D-5090 Leverkusen 1 (DE)**
Erfinder: **Stollfuss, Bernd, D.I., Am Katterbach 76, D-5060 Bergisch- Gladbach 2 (DE)**

**EP 0 222 189 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1989

**Beschreibung**

Für die Herstellung von syndiotaktischem 1,2-Polybutadien sind zahlreiche Coordinationskatalysatoren auf Basis der Übergangsmetalle Titan, Vanadium, Chrom, Molybdän und Cobalt beschrieben worden. Die Mehrzahl dieser Katalysatorsysteme zeigt jedoch ungenügende Aktivität oder Selektivität. In einigen Fällen werden vernetzte Polymerisate erhalten, die für eine technische Verwendung ungeeignet sind. Technisch genutzt zur Herstellung von syndiotaktischem 1,2-Polybutadien werden folgende Cobaltverbindungen enthaltende Katalysatorsysteme:

1. Tri-isobutylaluminium/Wasser/Cobaltdibromid/Triphenylphosphin und
2. Triethylaluminium/Wasser/Cobalt-tris-acetylacetonat/ Schwefelkohlenstoff.

Auch diese Katalysatoren haben bei der großtechnischen Verwendung gravierende Nachteile. So lassen sich mit dem erstgenannten System nur in Chlorkohlenwasserstoffen als Polymerisationsmedium technisch ausreichende Katalysatoraktivitäten erreichen; solche Chlorkohlenwasserstoffe lassen sich aber nur mit großem Aufwand quantitativ aus dem Polymerisat entfernen und bereiten daneben in der Regel toxikologische Probleme. Das zweite Katalysatorsystem enthält als Komponente Schwefelkohlenstoff, der infolge seines niedrigen Siedepunktes und seiner niedrigen Zündtemperatur besonderen sicherheitstechnischen Aufwand notwendig macht. Darüber hinaus besitzen die mit diesem Katalysator erzeugten 1,2-Polybutadiene sehr hohe Schmelztemperaturen (200° C) und sind daher nur schwer zu verarbeiten.

Die seit langem bekannten Coordinationskatalysatoren auf Basis von Chromverbindungen, z. B. Triethylaluminium/Chrom-tris-acetylacelonat besitzen nur eine geringe Aktivität und liefern Polymere mit sehr niedrigen Molmassen, so daß ihre technische Nutzung bisher nicht möglich war. In der JP-A-7 306 939 werden Chromkatalysatoren beschrieben, die neben Trialkylaluminium und einer Chrom-III-verbindung noch ein Dialkylphosphit, z. B. Dibutylphosphit enthalten. Damit wird ein extrem hochmolekulares wenig kristallines 1,2-Polybutadien erhalten, das Gelanteile enthält.

Überraschenderweise wurde nun gefunden, daß man hochaktive Katalysatoren für die Herstellung von syndiotaktischem 1,2-Polybutadien durch Lösungspolymerisation von Butadien-1,3 in Kohlenwasserstoffen unter Verwendung von metallorganischen Mischkatalysatoren auf der Basis von kohlenwasserstofflöslichen Chrom-III-verbindungen, Trialkylaluminium und Dialkylphosphiten erhält, wenn man als Dialkylphosphite solche der allgemeinen Formel I verwendet:

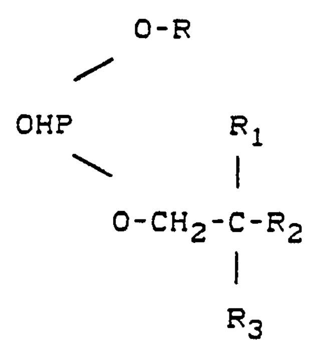

(I)

in der
R unverzweigtes oder verzweigtes $C_1$-$C_8$-Alkyl, und
$R_1$, $R_2$ und $R_3$ Methyl oder Ethyl sind.

Bevorzugt wird Di-neopentylphosphit oder Neopentylmethylphosphit eingesetzt. Als kohlenwasserstoflösliche Chrom-III-verbindungen kommen Chromtrisacetylacetonat oder bevorzugt Chromcarboxylate wie Chrom-III-stearat, Chrom-III-octanoat und Chrom-III-versatat in Frage. Als Trialkylaluminiumverbindungen werden z. B. solche mit $C_1$-$C_8$-Alkylresten eingesetzt. Bevorzugt wird Triethylaluminium eingesetzt. Zur Regelung der Molekularmasse des syndiotaktischen Vinylpolybutadien kann man kleine Mengen 1,2-Butadien einsetzen, ohne die Katalysatoraktivität zu verringern, vorzugsweise 100 bis 10 000 ppm, insbesondere 500 bis 3000 ppm, bezogen auf die Butadien-1,3-Menge.

Als Polymerisationsmedium werden aromatische, cycloaliphatische oder aliphatische Kohlenwasserstoffe eingesetzt, z. B. Benzol, Toluol, Cyclohexan, Methylcyclopentan oder n-Hexan. Neben den reinen Kohlenwasserstoffen können auch technische Gemische der obengenannten Kohlenwasserstoffe, z. B. solche aus n-Hexan, Methylpentanen, Dimethylbutanen und Cycloalkanen verwendet werden.

Die Butadienkonzentration im Polymerisationsansatz kann 10 bis 50 Gew.-% betragen. Für Polymerisate im technisch interessanten Molmassenbereich sind Butadienkonzentrationen von 15 bis 25 Gew.-% besonders geeignet. Die Polymerisation wird nach der üblichen Technik der Lösungspolymerisation unter einem inerten Schutzgas wie Stickstoff oder Argon durchgeführt. Die Polymerisationstemperatur kann von +30 bis +130° C gewählt werden. Bevorzugt ist der Temperaturbereich von 35 bis 65° C. Die Polymerisationswärme kann durch Außenkühlung, Siedekühlung oder durch Kombination beider Methoden abgeführt werden.

Das Polymerisationsverfahren kann diskontinuierlich oder kontinuierlich durchgeführt werden. Die Polymerisation führt in 0,5 bis 4 Stunden entsprechend der gewählten Polymerisationstemperatur zu Monomerumsätzen über 90 %. Nach beendeter Polymerisation wird das Katalysatorsystem durch Zusatz von H-aciden Verbindungen, wie Alkoholen oder Carbonsäuren, desaktiviert.

Die abgestoppten Polymerisatlösungen werden mit nicht verfärbenden Antioxidantien, z. B. 2,6-Di-tert.-butyl-4-methylphenol in Dosierungen von 0,2 bis 2 Gew.-%, bezogen auf Polymerisat, versetzt. Das Vinylpolybutadien wird aus der Lösung durch Fällen mit Alkoholen, wie Methanol, Ethanol und Isopropanol oder durch Wasserdampfdestillation des Lösungsmittels isoliert und anschließend getrocknet. Das Produkt kann auch mit Hilfe einer Verdampfungsschnecke vom Lösungsmittel getrennt und der extrudierte Vinylpolybutadien-Strang nach Passieren einer Abkühlvorrichtung in Zylinderform geschnitten werden.

Die erfindungsgemäßen Katalysatoren können in situ im Lösungsmittel-Monomer-Gemisch durch Zugabe der Katalysatorkomponenten erzeugt werden. Die Reihenfolge der Zugabe der Komponenten ist dabei nicht kritisch. Bevorzugt wird die Reihenfolge Aluminiumtrialkyl, Chrom-III-verbindung, Phosphit. Die Katalysatoren können aber auch präformiert oder teilpräformiert werden. Bei der Präformierung werden zunächst Aluminiumtrialkyl und Chrom-III-verbindung in einem der obengenannten Lösungsmittel umgesetzt, dessen Menge so gewählt wird, daß, bezogen auf Chrom, eine 0,005 bis 0,01 molare Lösung erhalten wird. Danach wird das Phosphit zugesetzt. Der präformierte Katalysator erreicht nach wenigen Minuten seine volle Aktivität. Bei der Teilpräformierung setzt man Chrom-III-verbindung und Phosphit in 0,01 - 1 molarer Lösung an und gibt diese der Mischung aus Butadien und Lösungsmittel vor oder nach dem Zusatz des Aluminiumtrialkyls zu. Die Menge an Chrom-III-verbindung beträgt 0,01 - 0,5 mmol pro 100 g Butadien; bevorzugt werden 0,05 - 0,1 mmol verwendet. Das Molverhältnis Al : Cr : P kann 5 - 50 : 1 : 2 - 15 betragen. Bevorzugte Molverhältnisse liegen bei 10 - 25 : 1 : 3 - 10.

Mindestens 70 %, bevorzugt jedoch 80 bis 98 % der Doppelbindungen des erfindungsgemäß hergestellten Vinylpolybutadien sind Vinyldoppelbindungen. Die Polymerisate sind vollkommen gelfrei und lösen sich in Toluol bei 80° C vollständig.

Die erfindungsgemäß hergestellten Vinylpolybutadiene können zu Formkörpern, z. B. Schuhsohlen, Platten oder Folien verarbeitet werden. Ferner können sie allein oder im Verschnitt mit Kautschuken, z. B. Naturkautschuk, Styrol-Butadien-Katuschuk, Cis-Polybutadien oder Ethylen-Vinylacetatcopolymeren unter Verwendung von Schwefel-Beschleuniger-Systemen oder Radikalbildnern vernetzt werden. So hergestellte Gummiartikel können weitere Hilfsstoffe wie Füllstoffe (Ruß, Kieselsäure, Kreide, und Weichmacher enthalten.

**Beispiel 1**

In einem 3 l-Glasautoklav, ausgerüstet mit Rührer und Tieftemperaturrückflußkühler, wurden unter Ausschluß von Sauerstoff und Wasser 1500 ml Cyclohexan ($H_2O$-Gehalt (3 ppm), 200 g Butadien-1,3 ($H_2O$-Gehalt (3 ppm) und 0,2 g Butadien-1,2 vorgelegt.

Dann gab man 2,5 ml einer 1-molaren Triethylaluminium-Lösung in Cyclohexan, anschließend 1 ml einer 0,1-molaren Lösung von Chrom-III-octanoat in Cyclohexan zu und erwärmte auf 30°C. Dann gab man 0,15 g Dineopentylphosphit (0,67 mmol) zu. Die Polymerisation sprang augenblicklich an, erkenntlich am Temperaturanstieg. Durch Siedekühlung und gelegentliche Außenkühlung steuerte man die Reaktionstemperatur so, daß innerhalb von ca. 30 Minuten 50°C erreicht wurden. Man hielt die Temperatur für weitere 1,5 h bei 50°C. Dann gab man 1 g 2,6-Di-tert.- butyl-4-methylphenol, gelöst in 20 ml Ethanol, zu und ließ auf 30°C abkühlen. Das Polymerisat wurde mit 3000 ml Ethanol gefällt und im Vakuum bei 50°C bis zur Gewichtskonstanz getrocknet.

Die Ausbeute betrug 189 g (94,5 % der Theorie).

Die durch IR-Spektroskopie bestimmten Anteile der Doppelbindungen des Polymerisates:

| | |
|---|---|
| Vinyl: | 92,8 % |
| cis-1,4: | 5,7 % |
| trans-1,4: | 1,5 % |

Viskositätszahl [η]: 2,71 dl/g, Toluol, 80°C

**Beispiel 2**

Das Beispiel 1 wurde wiederholt mit dem Unterschied, daß 0,22 g Dineopentylphosphit entsprechend 1,0 mmol eingesetzt wurden.

Der 3 h - Umsatz betrug 97,5 %

Die durch IR-Spektroskopie bestimmte Mikrostruktur des Polymerisats war:

| | |
|---|---|
| Vinyl | 93,5 % |
| cis-1,4 | 5,7 % |
| trans-1,4 | 0,8 % |

Viskositätszahl [η] = 2,73 dl/g, Toluol, 80°C

**Beispiele 3 - 6**

Gemäß der im Beispiel 1 beschriebenen Verfahrensweise wurde Butadien polymerisiert mit dem einzigen Unterschied, daß als Dialkylphosphit Methyl-neopentylphosphit

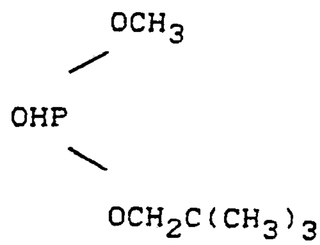

eingesetzt wurde. Die Versuchsergebnisse sind in der Tabelle 1 angegeben:

**Tabelle 1**

| Beispiel | | 3 | 4 | 5 | 6 |
|---|---|---|---|---|---|
| Cyclohexan (ml) | | 1500 | 1500 | 1500 | 1500 |
| Butadien-1,3 (g) | | 200 | 200 | 200 | 200 |
| Butadien-1,2 (g) | | 0,15 | 0,20 | 0,25 | 0,25 |
| $Al(C_2H_5)_3$ (mmol) | | 5,0 | 2,5 | 2,5 | 2,5 |
| $Cr(oct)_3$ (mmol) | | 0,2 | 0,15 | 0,1 | 0,1 |
| $OHP(OCH_3)OCH_2\text{-}C(CH_3)_3$ (mmol) | | 2,0 | 1,5 | 1,0 | 0,8 |
| Umsatz | % | 100 | 96 | 99 | 97 |
| Vinyl | % | 92,7 | 91,2 | 93,1 | 91,2 |
| cis-1,4 | % | 7,3 | 8,3 | 6,9 | 7,8 |
| trans-1,4 | % | - | 0,5 | - | 1,0 |
| [η] dl/g, Toluol, 80° C | | 3,30 | 2,89 | 2,50 | 2,67 |

**Beispiele 7 - 11** (Vergleichsversuche)

In der im Beispiel 1 beschriebenen Weise wurden die in Tabelle 2 angegebenen Vergleichsversuche mit Dimethylphosphit und Di-n-butylphosphit durchgeführt.

**Tabelle 2**

| Beispiel | | 7 | 8 | 9 | 10 | 11 |
|---|---|---|---|---|---|---|
| Tuluol | (ml) | 600 | 1500 | - | - | - |
| Cyclohexan | (ml) | - | - | 1500 | 1500 | 1500 |
| Butadien-1,3 | (g) | 200 | 200 | 200 | 200 | 200 |
| Butadien-1,2 | (g) | - | 0,1 | 0,2 | 0,2 | 0,2 |
| $Al(C_2H_5)_3$ | (mmol) | - | 5 | 2,5 | 5,0 | 10,0 |
| $Al(iC_4H_9)_3$ | (mmol) | 5 | - | - | - | - |
| $Cr(acetylacetonat)_3$ | (mmol) | 0,83 | - | - | - | - |
| $Cr(oct)_3$ | (mmol) | - | 0,2 | 0,1 | 0,2 | 1,0 |
| $(CH_3O)_2PHO$ | (mmol) | - | - | 0,67 | 0,67 | - |
| $(C_4H_9O)_2$ | (mmol) | 0,3 | 0,5 | - | - | 0,5 |
| Umsatz % nach 3h, 50° C | | 74 | 64 | 0 | 63 | 85 |
| Vinyl | % | 88,5 | 88,2 | - | 89,2 | 86,5 |
| cis-1,4 | % | 11,5 | 11,8 | - | 10,8 | 13,5 |
| trans-1,4 | % | - | - | - | - | - |
| [η] dl/g, Toluol, 80° C | | 13,2* | 4,04 | - | 2,75 | 2,87 |

* gelhaltig

Aus diesen Vergleichsversuchen zeigt sich sehr deutlich die wesentlich höhere Aktivität des im Beispiel 1

verwendeten erfindungsgemäßen Katalysatorsystems gegenüber dem Stand der Technik.

Erst bei Einsatz der zehnfachen Menge an Chrom-III-octanoat und ebenfalls deutlich erhöhten Mengen der übrigen Katalysatorkomponenten erhält man einen vergleichbar hohen Umsatz von Butadien zu syndiotaktischem 1,2-Polybutadien (Vergleichsbeispiel 11).

Bei einer Beispiel 1 entsprechenden Katalysatordosierung tritt keine Polymerisation ein (Vergleichsversuch 9).

**Patentansprüche**

1. Verfahren zur Herstellung von syndiotaktischem 1,2-Polybutadien durch Lösungspolymerisation von Butadien-1,3 in Kohlenwasserstoffen unter Verwendung von metallorganischen Mischkatalysatoren aus Trialkylaluminium, kohlenwasserstofflöslichen Chrom-III-verbindungen und Dialkylphosphiten, dadurch gekennzeichnet, daß man als Dialkylphosphite solche der allgemeinen Formel (I) verwendet:

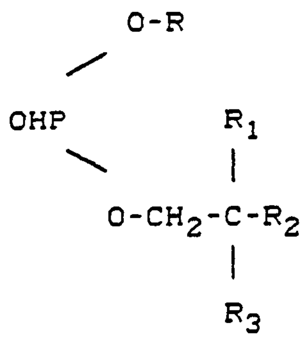

(I)

in der
R unverzweigtes oder verzweigtes $C_1$-$C_8$-Alkyl und
$R_1$, $R_2$ und $R_3$ Methyl oder Ethyl sind.

2. Verfahren nach Anspruch 1, dadurch gekennzeichnet, daß man die Polymerisation in Gegenwart von 100 bis 10 000 ppm und bevorzugt von 500 bis 3000 ppm Butadien-1,2, bezogen auf die eingesetzten Mengen an Butadien-1,3, durchführt.

3. Verfahren nach Anspruch 1, dadurch gekennzeichnet, daß man unter einem inerten Schutzgas bei +30 bis +130° C polymerisiert.

4. Katalysator auf der Basis Trialkylaluminium, kohlenwasserstofflöslicher Chrom-III-verbindung und Dialkylphosphit, dadurch gekennzeichnet, daß ein Dialkylphosphit der Formel

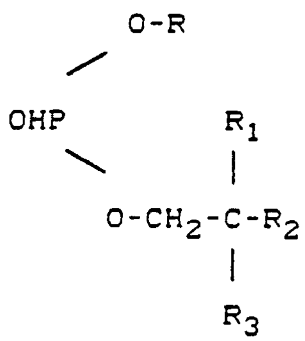

(I)

eingesetzt wird, in der
R unverzweigtes oder verzweigtes $C_1$-$C_8$-Alkyl und
$R_1$, $R_2$ und $R_3$ Methyl oder Ethyl sind.

5. Katalysator nach Anspruch 4, dadurch gekennzeichnet, daß das Dialkylphosphit Di-neopentylphosphit ist.

6. Katalysator nach Anspruch 4 aus (a) Triethylaluminium, (b) Chrom-III-stearat, -octanoat oder -versatat und (c) Di-neopentylphosphit.

7. Katalysator nach Anspruch 4, wobei das molare Verhältnis von Aluminiumverbindung zu Chrom-III-verbindung zu Phosphit 5 bis 50 : 1 : 2 bis 15, vorzugsweise 10 bis 25 : 1 : 3 bis 10 beträgt.

## Claims

1. Process for the preparation of syndiotactic 1,2-poly-butadiene by solution polymerisation of butadiene-(1,3) in hydrocarbons, using organometallic mixed catalysts of trialkyl aluminium, chromium-III compounds which are soluble in hydrocarbons, and dialkylphosphites, characterised in that the dialkylphosphites used are compounds corresponding to the following general formula (I):

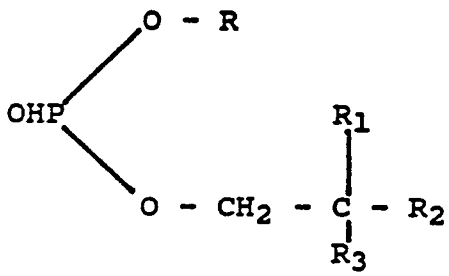

(I)

wherein
R denotes a branched or unbranched $C_1$-$C_8$ alkyl group and
$R_1$, $R_2$ and $R_3$ denote methyl or ethyl.

2. Process according to claim 1, characterised in that polymerisation is carried out in the presence of from 100 to 10 000 ppm, preferably from 500 to 3 000 ppm, of butadiene-(1,2), based on the quantities of butadiene-(1,3) used.

3. Process according to claim 1, characterised in that polymerisation is carried out under an inert protective gas at +30 to +130° C.

4. Catalyst based on trialkyl aluminium, a chromium-III compound which is soluble in hydrocarbons, and dialkyl phosphite, characterised in that a dialkyl phosphite corresponding to the following general formula is used:

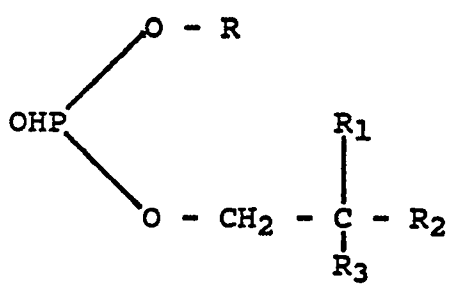

(I)

in which formula
R denotes a branched or unbranched $C_1$-$C_8$ alkyl group and
$R_1$, and $R_3$ denote methyl or ethyl.

5. Catalyst according to claim 4, characterised in that the dialkyl phosphite is di-neopentylphosphite.

6. Catalyst according to claim 4 obtained from (a) triethyl aluminium, (b) chromium-III-stearate, -octanoate or -versatate and (c) di-neopentylphosphite.

7. Catalyst according to claim 4, in which the molar ratio of aluminium compound to chromium-III compound to phosphite is from (5 - 50) : 1 : 2 to (15, preferably 10 - 25) : 1 : (3 - 10).

## Revendications

1. Procédé de production de 1,2-polybutadiène syndiotactique par polymérisation en solution de butadiène-1,3 dans des hydrocarbures en utilisant des co-catalyseurs organométalliques constitués de trialkylaluminium, de composés de chrome-III solubles dans les hydrocarbures et de phosphites de dialkyle, caractérisé en ce qu'on utilise comme phosphites de dialkyle des composés de formule générale (I):

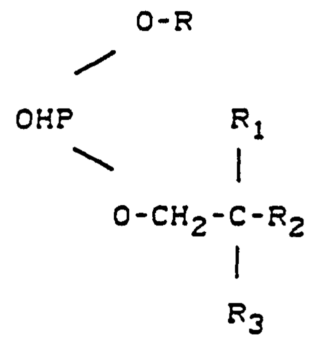

(I)

dans laquelle
R est un groupe alkyle en $C_1$ à $C_8$ non ramifié ou ramifié et
$R_1$, $R_2$ et $R_3$ sont des groupes méthyle ou éthyle.

2. Procédé suivant la revendication 1, caractérisé en ce qu'on conduit la polymérisation en présence de 100 à 10 000 ppm et de préférence de 500 à 3000 ppm de butadiène-1,2 par rapport aux quantités utilisées de butadiène-1,3.

3. Procédé suivant la revendication 1, caractérisé en ce qu'on conduit la polymérisation sous un gaz protecteur inerte entre +30 et +130° C.

4. Catalyseur à base d'un trialkylaluminium, d'un composé de chrome-III soluble dans les hydrocarbures et d'un phosphite de dialkyle, caractérisé en ce qu'on utilise un phosphite de dialkyle de formule

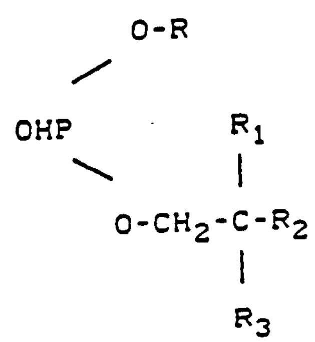

(I)

dans laquelle
R est un groupe alkyle en $C_1$ à $C_8$ non ramifié ou ramifié et
$R_1$, $R_2$ et $R_3$ sont des groupes méthyle ou éthyle.

5. Catalyseur suivant la revendication 4, caractérisé en ce que le phosphite de dialkyle est le phosphite de di-néopentyle.

6. Catalyseur suivant la revendication 4, constitué (a) de triéthylaluminium, (b) de stéarate, d'octanoate de de versatate de chrome-III et (c) de phosphite de di-néopentyle.

7. Catalyseur suivant la revendication 4, dans lequel la proportion molaire composé d'aluminium composé de chrome-III phosphite est de 5 - 50 : 1 : 2 - 15, de préférence de 10 - 25 : 1 : 3 - 10.